# DEMANDE DE BREVET EUROPEEN

(11) **EP 1 580 096 A1**
(43) Date de publication de la demande: **28.09.2005**
(21) Numéro de dépôt: 05300184.8
(22) Date de dépôt: 15.03.2005
(51) Int. Cl.: B62D 21/02, B62D 25/20, F16F 15/02

(54) **Châssis de véhicule comportant un dispositif antivibratoire**

(30) Priorité: 23.03.2004 FR 0402943
(71) Demandeur: Peugeot Citroen Automobiles S.A., 78140 Vélizy Villacoublay (FR)
(72) Inventeur: Janin, Jean-Marc, F-78180 Montigny le Bretonneux (FR); Merlette, Nicolas; Peugeot Citroen Automobiles SA, F-78330 Fontenay le Fleury (FR); Dupe, Julie, F-75014 Paris (FR)
(74) Mandataire: Fernandez, Francis Lionel

(57) **Abrégé**

L'invention se rapporte à un dispositif antivibratoire pour structure métallique comportant des moyens de rigidification (11, 12, 13, 14) et des moyens absorbeurs d'énergie (15). Selon l'invention, lesdits moyens de rigidification (11, 12, 13, 14) sont fixés à une extrémité à ladite structure et une autre extrémité desdits moyens de rigidification (11, 12, 13, 14) est fixée aux-dits moyens absorbeurs d'énergie (15).

## Description

L'invention se rapporte à un dispositif antivibratoire pour structure métallique, ainsi qu'à un châssis de véhicule comportant un tel dispositif.

L'invention concerne plus particulièrement un dispositif antivibratoire pour structure métallique comportant des moyens de rigidification et des moyens absorbeurs d'énergie.

Les structures métalliques, telles que des châssis de véhicule peuvent être soumises à des vibrations lors du déplacement de ce dernier. En effet, les vibrations du moteur et des trains induisent des excitations mécaniques dans la caisse du véhicule. Ces dernières excitent des modes globaux de la caisse pour des basses fréquences. Ainsi, les excitations mécaniques de la caisse influent fortement sur le comportement routier et le confort du véhicule.

Pour contrôler ces modes globaux, il est connu de rigidifier ces structures notamment grâce à des barres métalliques placées de façon à relier différentes parties du châssis, ces barres sont appelées des « tirants ».

On a récemment trouvé que la coopération entre de tels tirants et des moyens absorbeurs d'énergie améliorent encore le confort vibratoire et acoustique des véhicules par amortissement des vibrations.

L'une des technologies consiste à composer des tirants à l'aide de matériaux métalliques et de matériaux possédant un caractère viscoélastique. Le matériau viscoélastique possède la particularité de se déformer sous l'effet des sollicitations que lui impose la structure. Ainsi, il permet la conversion de l'énergie vibratoire en énergie thermique. Les matériaux viscoélastiques présentent donc l'avantage de contrôler les modes globaux de la caisse par amortissement.

Parmi de tels dispositifs connus mariant des moyens de rigidification et des moyens absorbeurs d'énergie, on peut citer des tirants formés par un empilement alternatif de bandes en matériaux métalliques (acier...) et de bandes en matériaux viscoélastiques. Ces dispositifs permettent la dissipation de l'énergie vibratoire, grâce à un cisaillement de la bande en matériau viscoélastique placée entre deux bandes d'acier.

Toutefois, ce type de tirant possède des inconvénients. Ainsi, lors d'une contrainte importante, le matériau viscoélastique peut se déchirer ou se décoller des bandes métalliques et entraîner la rupture du tirant. Afin d'éviter ce type de dégradation, les tirants actuels sont souvent surdimensionnés. Ce type de tirant peut ainsi peser de 1 à 3 kilos.

D'autre part les tirants, correspondants à ceux décrits précédemment, sont mis au point pour un type de véhicule. Ainsi, pour chaque nouveau véhicule, la conception des tirants doit être totalement reconsidérée. En effet, la géométrie et le choix des matériaux du tirant sont propres à chaque véhicule.

Enfin, le procédé de fabrication d'un tel tirant est complexe et coûteux. Il nécessite l'emboutissage, puis l'usinage de pièces métalliques. Le matériau viscoélastique est ensuite fixé par une réticulation effectuée directement sur les pièces métalliques ou bien par collage sur ces pièces. L'assemblage des pièces métallique et du matériau viscoélastique est ensuite consolidé par un boulonnage. L'outillage nécessaire à la fabrication est ainsi propre à chaque type de tirant et donc à chaque type de véhicule.

Il existe d'autres types de tirants, tels que ceux décrits dans le brevet FR03/11445. Ces tirants sont composés de fils métalliques et de fils en matériaux viscoélastiques entrelacés de façon à former un câble.

Mais ce type de tirants, tout comme les tirants décrits plus haut, présentent l'inconvénient d'être peu efficaces pour les parties du soubassement possédant des déplacements relativement faibles. En effet, les déplacements de ces parties ne sont pas assez importants pour permettre le cisaillement du matériau viscoélastique même si l'énergie mise en oeuvre dans les tirants est suffisante. L'amortissement de ces zones est alors relativement faible.

Un but de la présente invention est de pallier tout ou partie des inconvénients de l'art antérieur relevés ci-dessus.

A cette fin, le dispositif antivibratoire selon l'invention, par ailleurs conforme à la définition générique qu'en donne le préambule ci-dessus, est essentiellement caractérisé en ce que lesdits moyens de rigidification sont fixés à une extrémité à ladite structure et en ce qu'une autre extrémité desdits moyens de rigidification est fixée aux-dits moyens absorbeurs d'énergie.

Par ailleurs, l'invention peut comporter l'une ou plusieurs des caractéristiques suivantes :
- lesdits moyens de rigidification comportent des éléments oblongs, de type barres, bandes et/ou câbles,
- lesdits moyens de rigidification sont réalisés en matériau métallique,
- les moyens absorbeurs d'énergie sont fixés à ladite structure.
- les moyens de rigidification sont constitués d'une pluralité d'éléments oblongs, disposés symétriquement de part et d'autre desdits moyens absorbeurs, auxquels ils sont reliés,
- les moyens absorbeurs d'énergie comprennent au moins un élément absorbeur destiné à convertir au moins une partie de l'énergie vibratoire de la structure en énergie thermique et/ou électrique,
- les moyens absorbeurs d'énergie sont constitués d'une plaque composite comprenant au moins une plaque en matériau aux propriétés appropriées s'étendant entre deux plaques rigides,
- les moyens absorbeurs d'énergie sont constitués d'une plaque composite comprenant trois plaques rigides et deux plaques en matériau aux propriétés appropriées, ces dernières étant séparées par une plaque rigide,
- l'élément absorbeur est réalisé en matériau viscoélastique,
- l'élément absorbeur est réalisé en matériau piézoélectrique,

Un autre but de l'invention est de proposer un châssis de véhicule comportant un tel dispositif antivibratoire.

A cette fin, le châssis de véhicule comporte un soubassement comprenant deux longerons, des traverses servant à relier les longerons et des brancards montés dans le prolongement des longerons, caractérisé en ce qu'il comporte en outre au moins un dispositif antivibratoire, le dispositif antivibratoire étant adapté de façon à relier au moins deux parties distinctes du soubassement entre elles.

Par ailleurs, l'invention peut comporter l'une ou plusieurs des caractéristiques suivantes :
- le ou les dispositifs antivibratoires sont disposés de façon à relier un premier longeron à une autre partie du soubassement, tel qu'un deuxième longeron,
- le châssis de véhicule comporte un plancher reposant sur les longerons et un tunnel situé au milieu du plancher, le dispositif antivibratoire comporte lesdits moyens absorbeurs d'énergie placés au niveau du tunnel du soubassement,
- au moins deux moyens de rigidification sont disposés de façon à relier un premier longeron à un moyen absorbeur d'énergie, et qu'au moins deux autres moyens de rigidification sont disposés de façon à relier ce même moyen absorbeur d'énergie au deuxième longeron, de façon que les quatre moyens de rigidification décrivent une croix.

D'autres particularités et avantages apparaîtront à la lecture de la description ci-après faite en référence aux figures dans lesquelles :
- la figure 1 représente une vue de dessous d'un soubassement de véhicule équipé d'un dispositif antivibratoire conforme à l'invention,
- la figure 2 représente une vue schématique en coupe transversale, d'une partie du dispositif antivibratoire représenté à la figure 1, cette partie est conforme à un premier mode de réalisation de l'invention,
- la figure 3 représente un soubassement, tel que présenté à la figure 1, soumis à des contraintes de torsion,
- la figure 4 représente deux soubassements, conforme à la figure 1, soumis à des contraintes de flexion,
- la figure 5 représente une vue schématique du fonctionnement du dispositif antivibratoire utilisé sur les soubassements présentés aux figures 3 et 4,
- la figure 6 représente une vue schématique en coupe transversale d'une partie d'un dispositif antivibratoire conforme à un deuxième mode de réalisation de l'invention.

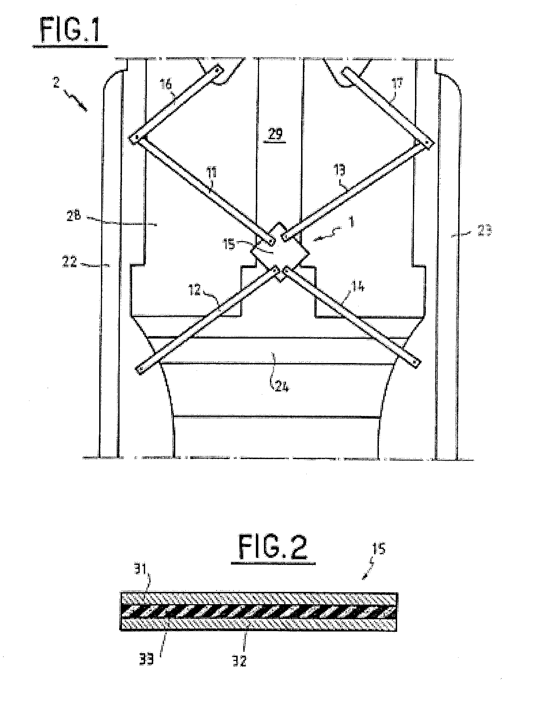

Le châssis 2, aussi appelé soubassement, représenté à la figure 1 comprend classiquement des traverses 24, qui servent à relier les deux longerons 22, 23 du véhicule. Un plancher 28 repose sur les longerons 22, 23. Un tunnel 29 est situé au milieu du plancher 28. Le tunnel 29 peut être réalisé par une déformation du plancher 28 par emboutissage ou être constitué d'une pièce rapportée placée sous le plancher 28.

Lorsque le soubassement 2 du véhicule est soumis à des vibrations, sa structure est alors contrainte par différents efforts. Elle peut notamment subir des torsions ou des flexions : différentes parties de la structure ont alors un déplacement relatif par rapport à leur position de repos.

Le dispositif antivibratoire 1, objet de l'invention, placé sur le soubassement 2, se compose de quatre moyens de rigidification 11, 12, 13, 14, appelés « tirants », chaque tirant a une de ses extrémités fixée à un moyen absorbeur d'énergie 15 destiné à amortir les vibrations, appelé « volant torsionnel ».

Les tirants 11, 12, 13, 14, sont formés par des barres métalliques mais ils peuvent aussi être formés par des bandes ou des câbles. Ainsi un maximum d'efforts est transmis du soubassement 2 au volant torsionnel 15. Les tirants 11, 12, 13, 14, mesurent généralement entre 10 et 2000 mm. Ce type de tirants 11, 12, 13, 14 est similaire aux tirants 16, 17 déjà utilisés classiquement pour rigidifier le soubassement du véhicule.

Les tirants 11, 12, 13, 14 utilisés peuvent avoir des longueurs différentes et/ou des caractéristiques mécaniques différentes.

Ainsi, les tirants 11, 12, 13, 14 rigides permettent le transfert des contraintes du châssis 2 vers le volant torsionnel 15.

Un exemple de volant torsionnel 15 est représenté à la figure 2. Il se compose d'une plaque possédant une âme dissipative 33, par exemple en matériau viscoélastique, placée entre deux plaques métalliques 31, 32, par exemple en acier ou en aluminium.

Le matériau viscoélastique 33 est choisi de façon à ce qu'il possède, de préférence, un module de cisaillement assez faible par rapport à l'acier, afin de permettre un travail optimal de ce matériau sous les contraintes imposées par les plaques métalliques 31, 32.

Le matériau viscoélastique 33 peut être du SMACTANE, un matériau commercialisé par la société SMAC. Ce matériau a été choisi pour sa bonne capacité d'absorption des chocs et des vibrations sur une large bande de fréquence.

La plaque en matériau viscoélastique 33 peut être fixée aux plaques métalliques 31, 32 par réticulation ou par collage.

La plaque en matériau viscoélastique 33 possède une épaisseur comprise entre 0,05 et 100 mm, et de préférence entre 0,5 et 10 mm.

Les plaques en matériau métallique 31, 32 possèdent une épaisseur comprise entre 0,05 et 100 mm, et de préférence entre 0,5 et 10 mm. Les deux plaques en matériaux métalliques 31, 32 peuvent posséder des épaisseurs ou des caractéristiques mécaniques différentes.

Le volant torsionnel 15 peut notamment posséder la forme générale d'un carré, mais d'autres formes peuvent être envisagées : rectangulaire, circulaire... ou toute autre forme compatible avec les contraintes d'implantation du dispositif 15 sur le véhicule. La forme du volant torsionnel 15 est aussi choisie de façon à ce que le volant 15 possède un fonctionnement optimal.

Par exemple, le volant torsionnel 15, ayant la forme d'un carré, possède un côté dont la longueur est comprise entre 10 et 1000 mm, et de préférence entre 100 et 500 mm.

Excepté l'épaisseur, les plaques 31, 32, 33 composant le volant torsionnel 15 possèdent, approximativement la même dimension (largeur, longueur).

Mais d'autres cas peuvent être envisagés où les différentes plaques 31, 32, 33 possèdent des dimensions différentes.

Dans un autre cas, la plaque en matériau viscoélastique 33 peut comprendre un évidement, de façon à ce que le matériau viscoélastique se trouve seulement sur la zone de travail maximale.

La figure 1 présente un exemple de réalisation d'un dispositif antivibratoire 1 : deux tirants 11,12 sont disposés de façon à relier un premier longeron 22 au volant torsionnel 15 ; deux autres tirants 13, 14 sont disposés de façon à relier ce même volant torsionnel 15 au deuxième longeron 23. Les tirants 11, 12, 13, 14 sont ainsi disposés, symétriquement de part et d'autre du volant torsionnel 15 de façon à décrire une croix. Ainsi chaque tirant 11, 12, 13, 14 possède une extrémité fixée au soubassement 2 du véhicule, son autre extrémité est fixée au volant torsionnel 15.

Les plaques 31, 32, 33 composant le volant torsionnel 15 sont disposées parallèlement au soubassement du véhicule. Ainsi dans la suite de la description sont distinguées la plaque métallique 31 supérieure et la plaque métallique 32 inférieure du volant 15; cette dernière correspond à la plaque la plus proche du soubassement.

Les liaisons entre les tirants 11, 12, 13, 14 et le soubassement 2 du véhicule ou les liaisons entre les tirants 11, 12, 13, 14 et le volant torsionnel 15 doivent être rigides de façon à ce qu'un maximum d'efforts parvienne à l'âme dissipative 33 du volant torsionnel 15. Ces liaisons peuvent notamment être réalisées par vissage, soudage, sertissage.

Différents arrangements des tirants 11, 12, 13, 14 et du volant torsionnel 15 de la figure 2 par rapport au soubassement du véhicule sont possible, par exemples :
- la plaque métallique 32 inférieure du volant torsionnel 15 peut être fixée au soubassement du véhicule, notamment au tunnel 29 ; les tirants 11, 12, 13, 14 sont alors fixés à la plaque métallique 31 supérieure.
- Deux tirants 11, 14 peuvent être fixés sur la plaque métallique 32 inférieure du volant torsionnel 15 ; les deux autres tirants 12, 13 sont alors fixés à la plaque métallique 31 supérieure. Dans cette configuration, le volant torsionnel 15 n'est pas fixé au soubassement.
Selon cet arrangement les tirants 11, 12, 13, 14 fixés sur la même plaque peuvent notamment être montés dans le prolongement l'un de l'autre.

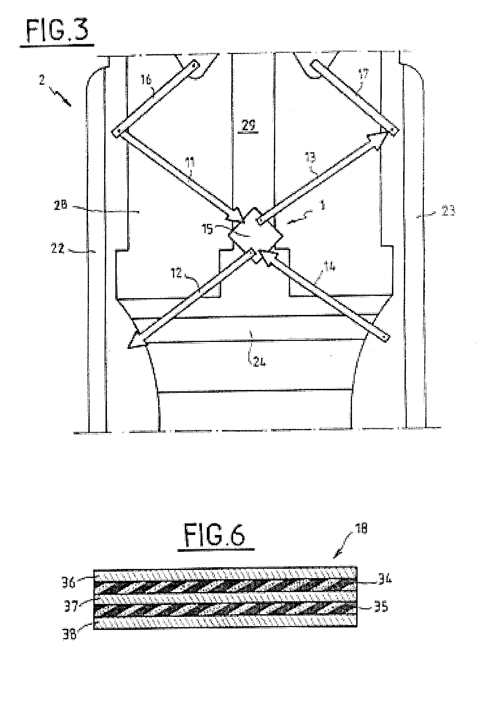

Ainsi dans le cas d'une torsion dynamique du soubassement, tel que représentée à la figure 3, les points latéraux avant et arrière du véhicule ont un mouvement relatif qui engendre un mouvement de traction/compression au niveau des tirants 11, 12, 13, 14, voir les flèches représentées à la figure 3.

L'effort induit par les tirants 11, 12, 13, 14 sur le volant torsionnel 15 est désaxé, ce qui génère un couple moteur entraînant le volant torsionnel 15 en rotation (voir figure 5). Ce désaxage permet de générer un phénomène de bras de levier et ainsi de concentrer les efforts au sein du matériau viscoélastique 33 ; le phénomène dissipatif se trouve alors amplifié. La conversion de l'énergie vibratoire se trouve améliorée.

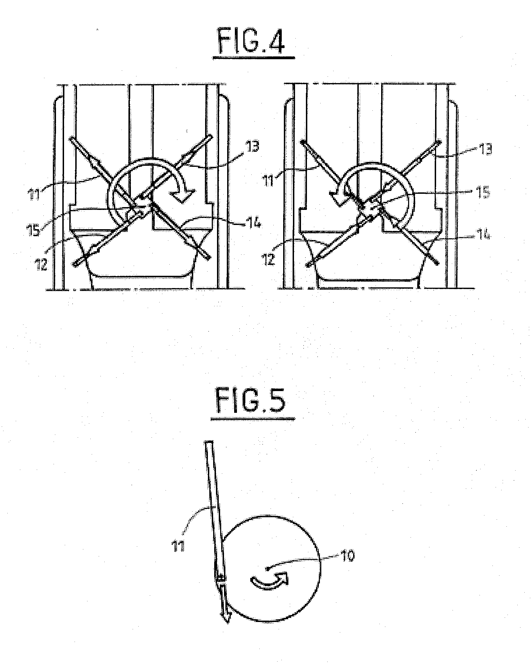

Dans le cas d'une flexion dynamique du soubassement, les points latéraux avant et arrière du véhicule ont un mouvement, qui engendrent, alternativement, un phénomène de traction ou de compression au niveau de tous les tirants 11, 12, 13, 14, voir le déplacement des tirants 11, 12, 13, 14 représentés à la figure 4. Le principe est alors identique au cas de la torsion, les mouvements de traction/compression sont transformés en mouvement de rotation au niveau du volant 15, voir les flèches représentées à la figure 4.

Ainsi dans le cas où la plaque 32 inférieure du volant torsionnel 15 est fixée au soubassement 2, seule la plaque supérieure 31 subit un mouvement de rotation.

Dans le cas où la plaque inférieure 32 est libre, les deux plaques 31, 32 métalliques du volant 15 subissent des mouvements de rotation différents.

Les mouvements relatifs des plaques métalliques 31, 32 l'une par rapport à l'autre entraînent un cisaillement du matériau viscoélastique 33. Le matériau viscoélastique 33 est alors le siège d'une transformation de l'énergie vibratoire en énergie thermique.

Les énergies de déformation du matériau viscoélastique 33 se trouvent alors concentrées principalement au niveau de la périphérie du volant torsionnel 15 de telle façon qu'au niveau du centre du volant torsionnel 15 l'énergie de déformation est plus faible.

Les liaisons entre les différentes plaques 31, 32, 33 du volant torsionnel 15 doivent être les plus raides possibles de façon à transmettre efficacement le mouvement des plaques métalliques 31, 32 au matériau viscoélastique 33.

L'utilisation de plusieurs tirants 11, 12, 13, 14 apportent plus de raideur et permet ainsi une concentration de l'énergie de déformation à dissiper.

Ainsi, même les parties du soubassement, possédant des déplacements relativement faibles, peuvent bénéficier d'un tel dispositif. En effet, le cisaillement du matériau viscoélastique 33 se fait alors grâce au bras de levier (figure 5) ; une amplification de la conversion de l'énergie vibratoire de l'ordre de dix par rapport à un système selon l'art antérieur peut être observée dans de tels cas.

D'autre part, afin d'augmenter la rotation du volant torsionnel 15 et d'ainsi améliorer le travail du matériau viscoélastique 33, la longueur des tirants 11, 12, 13, 14 peut être adaptée de façon à augmenter le bras de levier. De nombreuses capacités de réglage pour un tel dispositif 1 sont donc possibles.

Le volant torsionnel 15 peut aussi comprendre un axe de rotation 10 en son centre afin de favoriser la rotation des différentes plaques 31, 32, 33.

Le dispositif antivibratoire 1 objet de l'invention, présente l'avantage d'être simple et peu coûteux. Les tirants 11, 12, 13, 14 utilisés dans l'invention sont déjà utilisés classiquement. Le matériau viscoélastique 33 est fixé seulement au niveau du volant torsionnel 15 de façon classique. Ce dispositif 1 simple et rapide à mettre en oeuvre est compatible avec la production de grande série.

D'autre part, un tel volant torsionnel 15 est plus robuste que les câbles ou des empilements existants possédant un caractère dissipatif.

Les dimensions et donc le poids de ce type dispositif antivibratoire 1, peuvent être optimisés. Ainsi un allègement important pouvant aller jusqu'à plusieurs kilos peut être réalisé grâce à l'invention.

Si aucune vibration n'est présente au niveau du soubassement, le volant torsionnel 15 ne joue aucun rôle, les tirants 11, 12, 13, 14 continuent eux à rigidifier le soubassement du véhicule.

D'autres dispositifs antivibratoires (non représentés) peuvent être implantés sur un soubassement 2 de véhicule, en voici quelques exemples :
- un seul tirant peut être utilisé, une de ces extrémités est reliée à une partie du châssis 2, l'autre extrémité est fixée au volant torsionnel 15 fixé au soubassement 2 du véhicule.
- deux tirants peuvent être utilisés, l'un servant à relier un premier longeron 22 au volant torsionnel 15 ; l'autre relie ce même volant torsionnel 15 au deuxième longeron 23. Les tirants peuvent être disposés approximativement dans le prolongement l'un de l'autre.
- deux tirants peuvent être utilisés, ils peuvent être placés de façon à relier le volant torsionnel 15 à un seul longeron 22 ; les tirants sont alors placés de façon à décrire un V.
- trois tirants peuvent être utilisés, deux sont placés comme dans le cas cité ci-dessus, le dernier est placé de façon à relier le volant torsionnel 15 au deuxième longeron.

D'autres exemples, avec un ou plusieurs tirants, peuvent bien sûr être envisagés.

D'autres exemples de réalisation du volant torsionnel peuvent aussi être envisagés. Par exemple, le volant torsionnel peut être constitué d'un empilement formé alternativement de plusieurs plaques métalliques et de plusieurs plaques en matériau viscoélastique les extrémités du volant torsionnel sont réalisées en plaques métalliques.

La figure 6 représente un exemple d'un tel empilement formé de trois plaques métalliques 36, 37, 38 et de deux âmes dissipatives 34, 35, un cisaillement peut alors se produire dans les deux âmes 34, 35 dissipatives. Ces deux âmes 34, 35 peuvent présenter des propriétés différentes.

Ce type de volant torsionnel 18 peut remplacer le volant 15 de la figure 1. Un tel volant torsionnel 18 peut, par exemple, avoir sa plaque inférieure 38 fixée au soubassement 2, les deux autres plaques métalliques 36, 37 recevant chacune deux tirants. Le principe de fonctionnement de ce volant 18 reste le même.

D'autres empilements peuvent être envisagés, par exemple, un empilement comprenant cinq plaques métalliques et quatre âmes dissipatives : la plaque métallique inférieure peut être fixée au soubassement tandis que chaque autre plaque métallique reçoit un tirant.

Bien sûr l'invention couvre différents exemples d'implantation, par exemple, un dispositif antivibratoire 1 , tel que décrit précédemment, peut notamment être fixé de façon à relier différentes parties du soubassement du véhicule : traverses 24, des brancards, plancher 28...

Le choix de l'implantation d'un tel dispositif 1 peut se décider tardivement dans le développement d'un véhicule puisque la structure du soubassement 2 n'est pas modifiée.

Ainsi il peut être envisagé de fixer le volant torsionnel 15 sur une partie du plancher 28, bien sûr dans cette configuration les tirants peuvent avoir des longueurs différentes. Cet arrangement peut être intéressant pour contourner des contraintes d'encombrement.

Le dispositif 1 illustré ci-dessus dans le cadre d'un châssis 2 de véhicule concerne plus généralement n'importe quelle structure métallique.

Ainsi, on peut aussi placer le dispositif antivibratoire 1 objet de l'invention, dans l'habitacle du véhicule sur des parties soumises à des vibrations, par exemple au niveau de l'armature d'un dossier d'assise (exemple non représenté).

Un tel dispositif permet de conférer de la rigidité au siège et ainsi de limiter ses mouvements lorsque des contraintes importantes lui sont imposées. Par exemple, si l'on considère une armature de siège de forme parallélépipédique, les quatre coins de cette armature peuvent être reliés chacune par l'extrémité d'un tirant, leurs extrémités libres étant reliées à un volant torsionnel, de façon à ce que le dispositif forme une croix.

L'âme dissipative 33, 34, 35 des volants torsionnels 15, 18 décrits précédemment peut aussi être réalisée en tout autre matériau dissipatif, par exemple en un matériau permettant la conversion de l'énergie vibratoire en énergie électrique, tel qu'un matériau piézoélectrique.

D'autres matériaux permettant des dissipations par des frottements secs, tel qu'un matériau céramique, peuvent être utilisés. Dans un tel cas, l'âme dissipative est constituée de deux couches distinctes en matériaux céramique, le déplacement d'une couche sur l'autre permet la conversion de l'énergie vibratoire.

Ces différents matériaux présentent l'avantage d'être indépendants de la fréquence et de la température.

## Revendications

1. Châssis de véhicule comportant un soubassement comprenant deux longerons (22, 23), des traverses (24) servant à relier les longerons (22, 23) et des brancards montés dans le prolongement des longerons (22, 23), **caractérisé en ce qu'**elle comporte en outre au moins un dispositif antivibratoire comportant des moyens de rigidification (11, 12, 13, 14) et des moyens absorbeurs d'énergie (15, 18), lesdits moyens de rigidification (11, 12, 13, 14) étant fixés à une première extrémité à une première partie dudit soubassement et à une seconde extrémité aux-dits moyens absorbeurs d'énergie (15, 18), lesdits moyens absorbeurs d'énergie (15, 18) étant reliés à une seconde partie dudit soubassement, distincte de ladite première partie.

2. Châssis de véhicule selon la revendication 1, **caractérisé en ce que** les moyens de rigidification (11, 12, 13, 14) dudit dispositif antivibratoire comportent des éléments oblongs, de type barres, bandes et/ou câbles.

3. Châssis de véhicule selon la revendication 1 ou 2, **caractérisé en ce que** lesdits moyens de rigidification (11, 12, 13, 14) dudit dispositif antivibratoire sont réalisés en matériau métallique.

4. Châssis de véhicule selon l'une quelconque des revendications 1 à 3, **caractérisé en ce que** les moyens absorbeurs d'énergie (15, 18) dudit dispositif antivibratoire sont fixés au soubassement.

5. Châssis de véhicule selon l'une quelconque des revendications 2 à 4, **caractérisé en ce que** les moyens de rigidification (11, 12, 13, 14) dudit dispositif antivibratoire sont constitués d'une pluralité d'éléments oblongs, disposés symétriquement de part et d'autre desdits moyens absorbeurs d'énergie (15, 18), auxquels ils sont reliés.

6. Châssis de véhicule selon l'une quelconque des revendications 1 à 5, **caractérisé en ce que** les moyens absorbeurs d'énergie (15, 18) dudit dispositif antivibratoire comprennent au moins un élément absorbeur (33, 34, 35) destiné à convertir au moins une partie de l'énergie vibratoire du soubassement en énergie thermique et/ou électrique.

7. Châssis de véhicule selon la revendication 6, **caractérisé en ce que** les moyens absorbeurs d'énergie (15, 18) dudit dispositif antivibratoire sont constitués d'une plaque composite comprenant au moins une plaque (33, 34, 35) en matériau aux propriétés appropriées s'étendant entre deux plaques rigides (31, 32, 36, 37, 38).

8. Châssis de véhicule selon la revendication 6 ou 7, **caractérisé en ce que** les moyens absorbeurs d'énergie (18) dudit dispositif antivibratoire sont constitués d'une plaque composite comprenant trois plaques rigides (36, 37, 38) et deux plaques (34, 35) en matériau aux propriétés appropriées, ces dernières (34, 35) étant séparées par une plaque rigide (37).

9. Châssis de véhicule selon l'une quelconque des revendications 6 à 8, **caractérisé en ce que** l'élément absorbeur (33, 34, 35) est réalisé en matériau viscoélastique.

10. Châssis de véhicule selon l'une quelconque des revendications 6 à 8, **caractérisé en ce que** l'élément absorbeur (33, 34, 35) est réalisé en matériau piézoélectrique.

11. Châssis de véhicule selon l'une quelconque des revendications précédentes, comportant un plancher (28) reposant sur les longerons (22, 23) et un tunnel (29) situé au milieu du plancher (28), **caractérisé en ce que** le dispositif antivibratoire comporte lesdits moyens absorbeurs d'énergie (15, 18) placés au niveau du tunnel (29) du soubassement.

12. Châssis de véhicule selon l'une quelconque des revendications précédentes, **caractérisé en ce qu'**au moins deux moyens de rigidification (11, 12) sont disposés de façon à relier un premier longeron (22) à un moyen absorbeur d'énergie (15, 18), et qu'au moins deux autres moyens de rigidification (13, 14) sont disposés de façon à relier ce même moyen absorbeur d'énergie (15, 18) au deuxième longeron (23), de façon que les quatre moyens de rigidification (11, 12, 13, 14) décrivent une croix.
